# EUROPEAN PATENT SPECIFICATION

(11) **EP 2 332 787 B1**
(45) Date of publication and mention of the grant of the patent: **20.07.2011**
(21) Application number: 10155824.5
(22) Date of filing: 08.03.2010
(51) Int. Cl.: B60R 22/18, A44B 11/06, A44B 11/25

(54) **Seatbelt device**
Sicherheitsgurtvorrichtung
Dispositif de ceinture de sécurité

(43) Date of publication of application: 15.06.2011
(73) Proprietor: Honda Motor Co., Ltd., Tokyo 107-8556 (JP)
(72) Inventor: Kerkeling, Christoph, 63073 Offenbach/Am Main (DE)
(74) Representative: Herzog, Markus

(56) References cited:
- JP-U- 52 151 532
- US-A- 5 383 713
- US-A- 5 870 816
- US-A- 5 983 463

## Description

### BACKGROUND OF THE INVENTION

### Field of the Invention

The present invention relates to a seatbelt device.

### Description of the Related Art

Among seatbelt devices, there has been known a four-point seatbelt device including two shoulder belts and two lap belts (refer to JP-A-H07-291092).

The four-point seatbelt device has an advantage in that an occupant may be restrained with a suitable left and right balance compared with a three-point seatbelt device. However, since it is necessary to restrain the occupant's waist by using a lap belt, it is not possible to use a tongue freely movable with respect to a webbing as in the three-point seatbelt device. For example, when the tongue is adapted to be freely movable with respect to the webbing, a problem arises in that it is difficult to restrain the occupant's waist by using the lap belt. On the contrary, when the tongue is fixed to the webbing, a problem arises in that it is difficult to attach the tongue, located on the webbing restraining the occupant's waist, to a buckle when the occupant fastens the seatbelt device.

JP-U-52 151532 discloses a seatbelt device comprising a tongue and a buckle to which the tongue plate is inserted and fixed. The tongue of the known device comprises a clamping means which fixes the belt relative to the tongue. To move the tongue relative the belt, e.g. in order to fasten the belt, the user has to press a button or a lever.

### SUMMARY OF THE INVENTION

An object of the present invention is to provide a seatbelt device capable of facilitating the attachment of a tongue to a buckle and reliably restraining an occupant.

In order to achieve the above-described object, according to a first aspect of the invention, there is provided a seatbelt device including: a tongue (e.g., a tongue 45 in an embodiment) including a support member (e.g., a support member 46 in an embodiment) supporting a tongue plate (e.g., a tongue plate 48 in an embodiment) and allowing a webbing (e.g., a webbing W in an embodiment) to be inserted therethrough; a plunger (e.g., a plunger 53 in an embodiment) disposed in the support member; a movement member (e.g., a roller holder 57 in an embodiment) connected to the plunger and moving in a direction in which the webbing is interposed between the movement member and the support member when the plunger is pressed; a fixing member (e.g., a roller 56 in an embodiment) disposed in the movement member and fixing the webbing in accordance with a movement of the webbing in an insertion direction; and a buckle (e.g., a buckle 44 in an embodiment) to which the tongue plate is inserted and fixed, wherein the plunger is pressed into the support member in accordance with an operation of inserting the tongue plate into the buckle.

According to a second aspect of the invention, the fixing member is a roller (e.g., a roller 56 in an embodiment).

According to a third aspect of the invention, there is provided a release mechanism (e.g., a release mechanism 62 in an embodiment) disposed in the support member and moving the movement member in a direction in which pressing of the webbing is released.

In the first aspect of the invention, since the tongue is movable with respect to the webbing until the tongue is attached to the buckle, the tongue does not disturb the fastening operation of the occupant when the occupant fastens the seatbelt device. When the tongue is attached the buckle, the webbing is interposed between the support member and the fixing member through the plunger. Accordingly, it is possible to fix the tongue to a predetermined position of the webbing without any deviation, and thus to reliably restrain the occupant.

In the second aspect of the invention, since it is possible to decrease a friction force of the tongue moving relative to the webbing upon attaching the tongue to the buckle, it is possible to facilitate the operation.

In the third aspect of the invention, in the case where the tongue attached to the buckle gradually moves due to movement of the occupant so that the tightening force on the occupant becomes strong, it is possible to release the operation of pressing the tongue against the webbing by using the release mechanism without detaching the tongue from the buckle so that the position of the tongue with respect to the webbing is shifted and thus controlling tightening force to be appropriate.

### BRIEF DESCRIPTION OF THE DRAWINGS

FIG. 1 is a front view of an embodiment of the invention.
FIG. 2 is a side view of FIG. 1.
FIG. 3 is an enlarged view of a main part of FIG. 1.
FIG. 4 is a perspective view illustrating an attachment state of a tongue and a buckle.
FIG. 5 is a sectional view taken along the line A-A in FIG. 4.
FIG. 6 is a sectional view illustrating a release mechanism.
FIG. 7 is a sectional view showing another embodiment and corresponding to FIG. 5.

### DETAILED DESCRIPTION OF THE INVENTION

Next, an embodiment of the invention will be described with reference to the accompanying drawings.

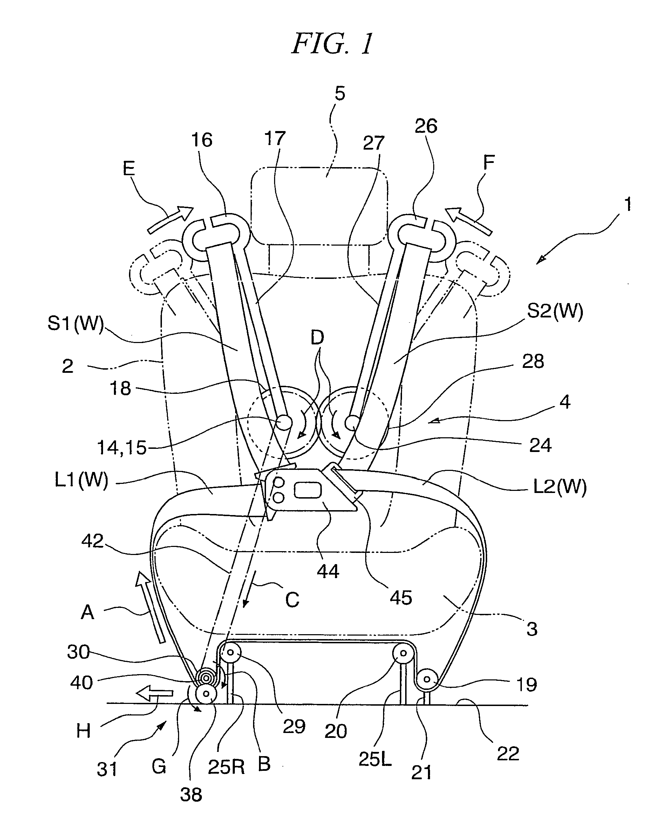

As shown in FIG. 1, a vehicle seat 1 is a seat disposed on a front row in a vehicle interior so as to face forward, and includes a seatback 2 and a seat cushion 3. The seat 1 is provided with a four-point seatbelt device 4.

Inside the seatback 2, a pair of support shafts 14 and 24, arranged along the left and right direction, is rotatably supported at the center portion of the seat 1 as viewed in the vertical direction thereof and at the center portion of the seat 1 as viewed in the width direction of the vehicle. A first arm 17 including a C-shaped first ring 16 disposed at the upper end thereof is tiltably supported by the right first support shaft 14, and a second arm 27 including a C-shaped second ring 26 disposed at the upper end thereof is tiltably supported by the left second support shaft 24. The first support shaft 14 and the second support shaft 24 respectively include a first driving gear 18 and a second driving gear 28 rotating together with the first support shaft 14 and the second support shaft 24, where the first driving gear 18 and the second driving gear 28 mesh with each other.

The lengths of the first arm 17 and the second arm 27 are determined so that the first ring 16 of the first arm 17 and the second ring 26 of the second arm 27 are located on both sides of a headrest 5 so as to correspond to the height of the shoulder of the tallest occupant, and the first ring 16 and the second ring 26 protrude from the upper end of the seatback 2. In addition, the upper ends of the first arm 17 and the second arm 27 are respectively connected to the first ring 16 and the second ring 26 at positions closer to the center portion of the seat 1 as viewed in the width direction of the vehicle than the centers of the first ring 16 and the second ring 26, and thus the first arm 17 and the second arm 27 are disposed closer to the center portion of the seat 1 as viewed in the width direction of the vehicle than first and second shoulder belts S 1 and S2 which are to be described later.

Below the seat cushion 3, a left lower pulley 19 is supported in a rotatable manner at a left outside position and on a floor panel 22 via a bracket 21, and a left upper pulley 20 is supported in a rotatable manner via a bracket 25L at a position closer to the center portion of the seat 1 as viewed in the width direction of the vehicle than the left lower pulley 19.

Moreover, below the seat cushion 3, a right upper pulley 29 is supported in a rotatable manner at a right inside position and on the floor panel 22 via a bracket 25R, and a right lower pulley 30 is supported, via a driving mechanism 31, at a position farther from the center portion of the seat 1 as viewed in the width direction of the vehicle than the right upper pulley 29 in a rotatable manner and in a manner movable in the width direction of the vehicle.

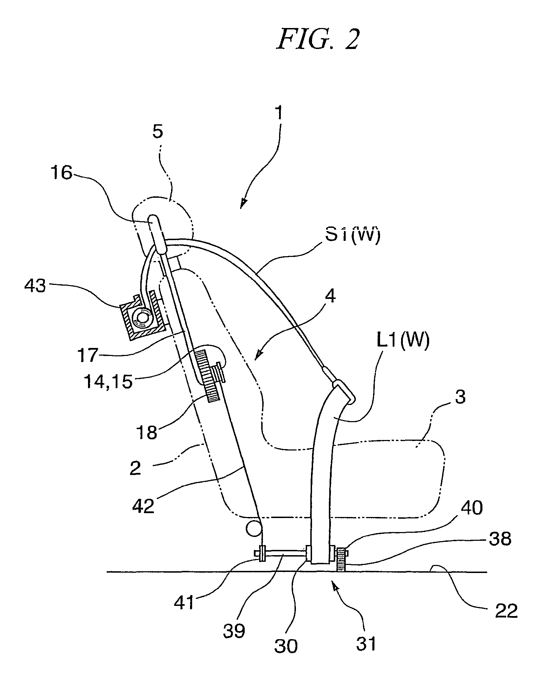

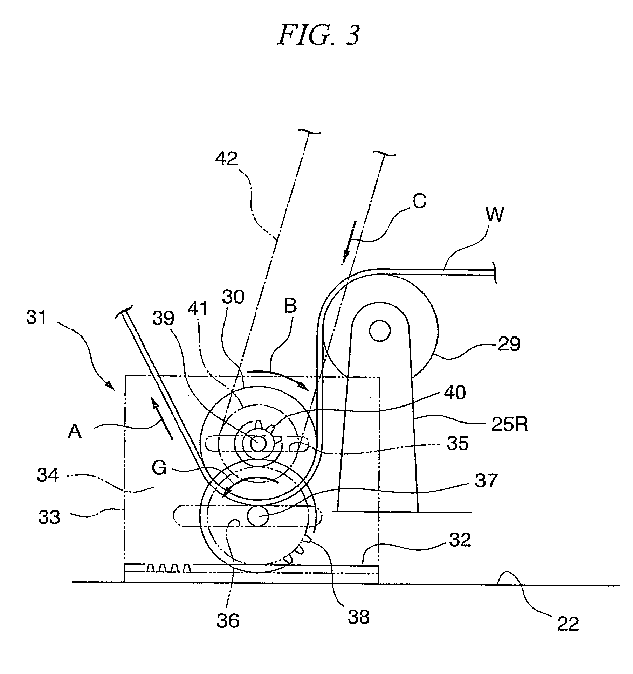

As shown in FIGS. 2 and 3, the driving mechanism 31 includes a rack 32 which is provided on the floor panel 22, a casing 33, upper and lower guide grooves 35 and 36 which are provided in a wall 34 of the casing 33 in the width direction of the vehicle, a driving gear 38 which meshes with the rack 32 so that a shaft 37 is movably guided by the lower guide groove 36, a pinion 40 which is coaxially provided with a shaft 39 of a right lower pulley 30 and meshes with the driving gear 38, and an arm driving gear 41 (refer to FIG 2) which is provided in the shaft 39 and is disposed in rear of the right lower pulley 30.

Here, although the guide groove 35, the guide groove 36, and the rack 32 are linearly depicted for convenience of drawing, the guide groove 35 is formed in an arc shape passing the shaft 39 about the support shaft 14. In the same manner, the guide groove 36 is formed in an arc shape so that the driving gear 38 meshes with the pinion 40 in accordance with the movement of the pinion 40, and the rack 32 is also formed in an arc shape so as to correspond to the guide groove 36.

The first support shaft 14 of the first driving gear 18 is provided with a gear 15, and a chain 42 is wound around the gear 15 and the arm driving gear 41.

In rear of the first ring 16, a retractor 43 is fixed to a position below the first ring 16 and behind the seatback 2. A webbing W may be wound around the retractor 43 downward from the first ring 16.

The extraction end of the webbing W passing through the first ring 16 is provided with a buckle 44, and a section from the first ring 16 to the buckle 44 forms a right first shoulder belt S 1. The end of a right first lap belt L1 is fixed to the buckle 44. The first lap belt L1 is wound around the right lower pulley 30 and the right upper pulley 29, is wound around the left upper pulley 20 and the left lower pulley 19 on the left side of the seat cushion 3, extends to the upper position of the seat cushion 3, and then arrives at a tongue 45 adapted to be inserted into the buckle 44.

A section from the left lower pulley 19 to the tongue 45 forms a left second lap belt L2 of the webbing W, and the webbing W from the tongue 45 to the second ring 26 forms a second shoulder belt S2 which are wound on the left retractor (not shown). Here, the tongue 45 is adapted to be fixed to the webbing W when being inserted into the buckle 44, and is also adapted to be movable while the fixing operation to the webbing W is released if necessary.

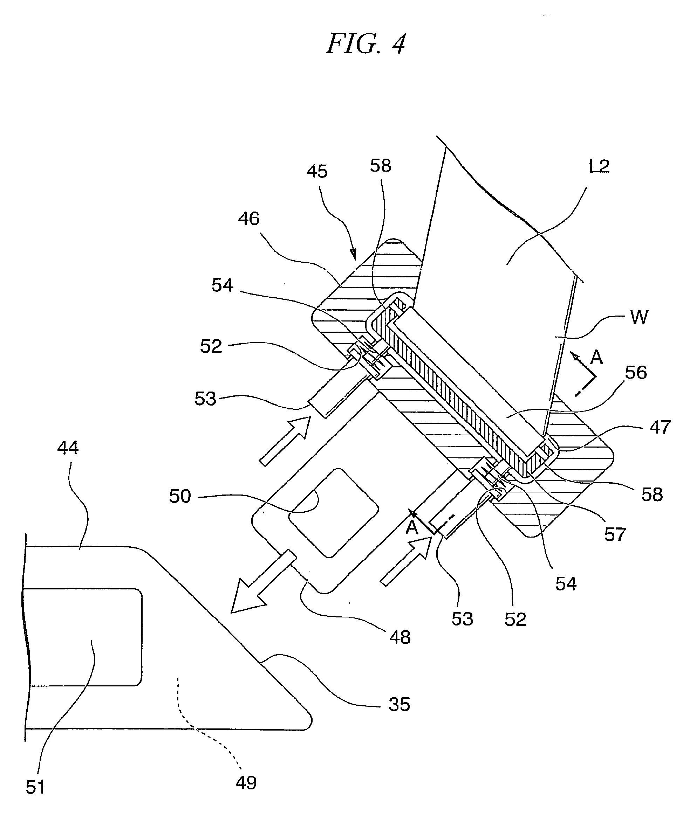

In detail, as shown in FIG. 4, the tongue 45 includes a square annular support member 46. The inside of the support member 46 is formed as an insertion hole 47 of the webbing W, and one side thereof supports a tongue plate 48. The tongue plate 48 is inserted through an insertion hole 49 of the buckle 44 so as to be attached thereto or detached therefrom. When the buckle 44 receives the tongue plate 48 of the tongue 45, a lock mechanism (not shown) provided therein is locked to a square engagement hole 50 provided in the tongue plate 48 so as to fix the tongue plate 48 to the buckle 44. The buckle 44 includes a release button 51 which releases the lock state of the tongue plate 48.

One side of the support member 46 is provided with slide holes 52 provided on both sides of the tongue plate 48, and plungers 53 are respectively attached to the slide holes 52 so as to be slidable. Each of the plungers 53 is urged by a spring 54 in a direction in which tongue plate 48 protrudes. When the tongue plate 48 is inserted and fixed to the insertion hole 49 of the buckle 44, the plunger 53 is pressed by an end surface 55 of the buckle 44 so as to be pressed into the slide hole 52.

Inside the insertion hole 47 of the support member 46, a roller holder 57 for rotatably supporting a roller 56 is provided so as to be movable on the side of the webbing W. The roller holder 57 supports the roller 56 by using both side walls 58, and also holds the roller 56 so as to be exposed to the side of the webbing W. A front end of the plunger 53 is fixed to the roller holder 57. When the plunger 53 is pressed inward, the roller holder 57 moves so that the roller 56 presses the webbing W against the inner surface (the inner surface of the insertion hole 47) of the other side of the support member 46. Here, since the roller holder 57 may be pressed inward in accordance with the plunger 53, the plunger 53 may come into contact with only the roller holder 57 without fixing the plunger 53 and the roller holder 57.

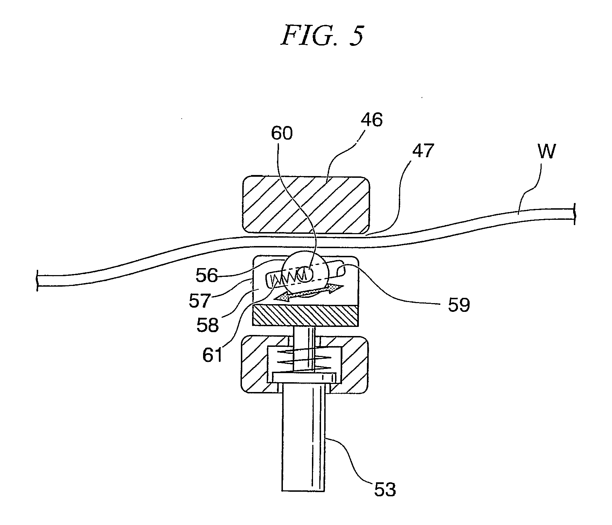

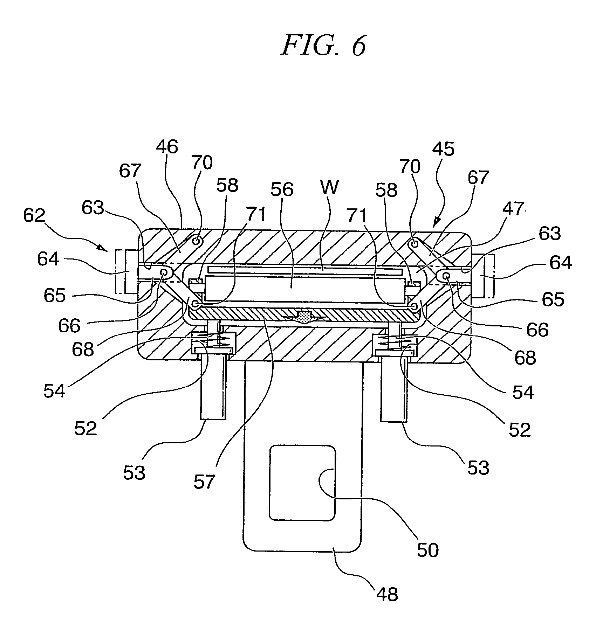

As shown in FIG. 5, both side walls 58 of the roller holder 57 are provided with guide grooves 59 which extend downward from the tongue 45 and gradually become close to the webbing W toward the webbing W. The guide grooves 59 respectively support both ends of a shaft portion 60 of the roller 56 so as to be rotatable and movable. A press spring 61 is provided inside the roller 57 so as to urge the shaft portion 60 of the roller 56 in a direction moving close to the webbing W (not shown in FIGS. 4 and 6), and normally urges the roller 56 in a direction in which the webbing W is pressed.

Accordingly, when the webbing W is pulled downward (the upper part of FIG. 4 and the right of FIG. 5), the roller 56 provided in the roller holder 57 fixes the webbing W to the inner surface of the other side of the support member 46.

Here, in order to solve a state in which the webbing W is allowed to move leftward in FIG. 5 so as to gradually tighten around the occupant's waist whenever the roller 56 of the tongue 45 attached to the buckle 44 moves along the guide groove 59 leftward in FIG. 5 of the webbing W due to movement of the occupant wearing the seatbelt device, a release mechanism 62 (not shown in FIG. 4) is provided so as to control the position of the tongue 45 by temporarily releasing the pressing operation of the roller 56 in the state where the tongue 45 is attached to the buckle 44.

As shown in FIG. 6, the release mechanism 62 includes arm insertion holes 63 which are respectively provided in both ends of the support member 46, an arm 65 which is inserted into the arm insertion holes 63 and press buttons 64 provided in the ends, and support-member-side arms 67 and roller-holder-side arms 68 which are rotatably supported by arm hinges 66 of the front end of the arm 65. The front end hinges 70 of the support-member-side arms 67 are rotatably supported by the support member 46, and the front end hinges 71 of the roller-holder-side arms 68 are rotatably supported by side walls 58 of the roller holder 57. Here, the support-member-side arms 67 and the roller-holder-side arms 68 are allowed to be movable by a void portion (not shown) provided in the support member 46.

Next, an operation of the seatbelt device 4 will be described.

In the state where the occupant gets off the vehicle, the first ring 16 and the second ring 26 move outward so as to be away from each other. Accordingly, the first shoulder belt S1 and the first lap belt L1 are suspended downward, and the second shoulder belt S2 and the second lap belt L2 are suspended downward, so that the buckle 44 and the tongue 45 are located at positions away from the center portion of the seat 1.

In this state, the occupant sitting on the seat 1 pulls the tongue 45 rightward so as to extract the webbing W from the left retractor, and inserts the tongue 45 into the right buckle 44 located in the right. Then, the plungers 53 on both sides of the tongue plate 48 are pressed into the end surface 55 of the buckle 44 against the spring 54. Accordingly, the roller holder 57 moves toward the webbing W, and the webbing W is interposed between the roller 56 and the inner surface of the other side of the support member 46, so that the tongue 45 is fixed to the webbing W.

Then, when the occupant pulls the buckle 44 having the tongue 45 inserted thereinto toward the center portion of the seat 1 as viewed in the width direction of the vehicle, because the tongue 45 is not separated from the webbing W, the first lap belt L1 is pulled leftward, and the webbing W of the first lap belt L1 of the side portion of the seatback 2 is pulled upward (as indicated by the arrow A in FIG. 1). Then, since the right lower pulley 30 rotates clockwise (as indicated by the arrow B in FIG. 1), the pinion 40 rotates clockwise d, so that the shaft 39 (shown in FIGS. 2-4) rotates and the chain 42 rotates clockwise (as indicated by the arrow C in FIG. 1).

Accordingly, as shown in FIG. 1, the gear 15 rotates clockwise, so that the first driving gear 18 rotates clockwise and the second driving gear 28 rotates counterclockwise (as indicated by the arrows D in FIG. 1). Accordingly, the first arm 17 and the second arm 27 are tilted inward about the first support shaft 14 and the second support shaft 24 of the first driving gear 18 and the second driving gear 28 (as indicated by the arrows E and F in FIG 1). Therefore, the first ring 16 and the second ring 26 move so as to be close to each other.

Here, when the right lower pulley 30 rotates in the direction indicated by the arrow B and the driving gear 38 rotates in the direction indicated by the arrow G by the pinion 40, the driving gear 38 moves on the rack 32 outward in the width direction of the vehicle (the direction indicated by the arrow H). Accordingly, since the right lower pulley 30 is displaced outward in the width direction of the vehicle together with the driving gear 38, a tension is applied in a direction in which the first lap belt L1 is wound so as to give a tension to the webbing W.

According to the above-described embodiment, since the tongue 45 is movable with respect to the webbing W until the tongue 45 is attached to the buckle 44, the tongue 45 does not disturb the fastening operation of the occupant when the occupant fastens the seatbelt device 4. When the tongue plate 48 of the tongue 45 is inserted into the buckle 44, the roller holder 57 is pressed through the plunger 53, and the webbing W is interposed between the support member 46 and the roller 56. Accordingly, it is possible to fix the tongue 45 to a predetermined position of the webbing W without any deviation, and thus to reliably restrain the occupant.

Then, since it is possible to decrease a friction force against the webbing W of the tongue 45 moving relative to the webbing W upon attaching the tongue 45 to the buckle 44 in such a manner that the roller 56 supported by the roller holder 57 is rotated, it is possible to facilitate the operation of attaching the tongue 45 to the buckle 44.

In addition, when the second lap belt L2 is pulled downward (rightward in FIG 5) in the state where the seatbelt device 4 is fastened, the roller 56 is pulled along the guide groove 59. Accordingly, it is possible to more strongly insert the webbing W between the support member 46 and the roller 56 by a wedging action, and to reliably prevent the tongue 45 from moving upward with respect to the webbing W. Accordingly, it is possible to prevent a so called submarine phenomenon in which the occupant moves forward unrestrained by the first and second lap belts L1 and L2 in the event of a vehicle collision by reliably holding the occupant's waist.

When the occupant extracts the tongue 45 from the buckle 44 by pressing the release button 51 of the buckle 44 so as to get out of the vehicle, the plunger 53 of the tongue 45 moves in a protruding direction due to the spring 54. Accordingly, the roller holder 57 retreats so as to release the pressing operation of the webbing W due to the roller 56, and hence the tongue 45 is freely movable with respect to the webbing W.

Accordingly, when the buttons 64 arranged at both ends of the support member 46 are pressed from the position depicted by the two-dot chain line to the position depicted by the solid line in the state where the roller 56 locks the webbing W in an interposed state, the arm 65 is pressed into the arm insertion hole 63, and the support-member-side arm 67 is rotated about the front end hinge 70 as the shaft, so that the front end hinge 71 of the roller-holder-side arm 68 supported by the arm hinge 66 forcibly presses out the roller holder 57 while overcoming the elastic force of the springs 54 of the plunger 53 in a releasing direction by which the pressing operation of the webbing W is released (as indicated by the arrow in FIG. 6). Accordingly, since it is possible to release the pressing of the webbing W against the support member 46 by using the roller 56, when a tightening force on the occupant's waist becomes large due to the downward movement of the tongue 45 in FIG. 1 caused by the occupant's movement, it is possible to maintain the appropriate restraining state by loosening a force of the second lap belt L2.

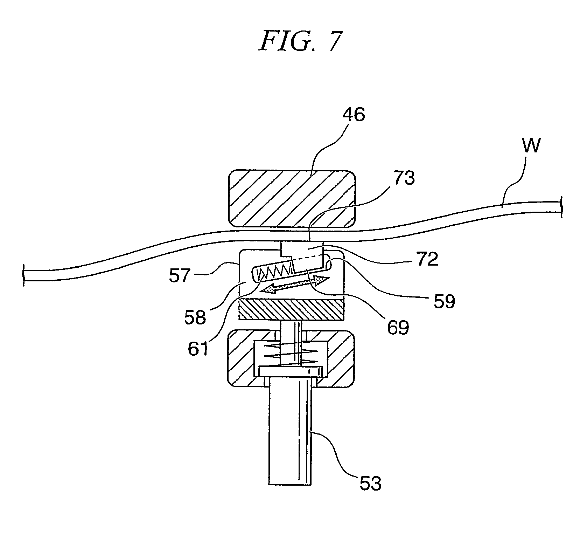

In addition, the invention is not limited to the above-described embodiment. For example, a wedge member 72 shown in FIG. 7 may be used instead of the roller 56 shown in FIG. 5. The wedge member 72 includes a pressing surface 73 formed in a portion pressing the webbing W, and a slider portion 69 sliding on the guide groove 59 instead of the shaft portion 60 of the roller 56. In addition, since the basic configuration of the wedge member 72 is the same as that of the first embodiment except that the slider portion 69 is pressed by the press spring 61, the same reference numeral is given to the same portion, and the description thereof is omitted.

According to the embodiment, since it is possible to provide the wedge member 72 in the support member 46 by engaging the slider portion 69 with the guide groove 59, it is possible to reliably support the slider portion 69 compared with the roller 56 supporting the movable shaft portion 60 to the guide groove 59, and thus to decrease the size of the support member 46 compared with the case where the roller 56 is used.

## Claims

1. A seatbelt device comprising:
a tongue (45) including a support member (46) supporting a tongue plate (48) and allowing a webbing (W) to be inserted therethrough;
a plunger (53) disposed in the support member (46);
a movement member (57) connected to the plunger (53) and moving in a direction in which the webbing (W) is interposed between the movement member and the support member (46) when the plunger (53) is pressed;
a fixing member (56) disposed in the movement member (57) and fixing the webbing (W) in accordance with a movement of the webbing (W) in an insertion direction; and
a buckle (44) to which the tongue plate (48) is inserted and fixed,
wherein the plunger (53) is pressed into the support member in accordance with an operation of inserting the tongue plate (48) into the buckle (44).

2. The seatbelt device according to claim 1, wherein the fixing member (56) is a roller.

3. The seatbelt device according to claim 1 or 2, further comprising a release mechanism (62) disposed in the support member (46) and moving the movement member (57) in a direction in which pressing of the webbing (W) is released.

## Patentansprüche

1. Sicherheitsgurtvorrichtung, umfassend:
eine Zunge (45), die ein Trägerelement (46) enthält, das eine Zungenplatte (48) trägt und das Einsetzen eines Gurts (W) dort hindurch erlaubt;
einen Stößel (53), der in dem Trägerelement (46) angeordnet ist;
ein Bewegungselement (57), das mit dem Stößel (53) verbunden ist und sich, wenn der Stößel (53) gedrückt wird, in einer Richtung bewegt,
in der der Gurt (W) zwischen dem Bewegungselement und dem Trägerelement (46) angeordnet ist;
ein Fixierungselement (56), das in dem Bewegungselement (57) angeordnet ist und den Gurt (W) gemäß einer Bewegung des Gurts (W) in einer Einführrichtung fixiert; und
ein Schloss (44), in das die Zungenplatte (48) eingesetzt und dort fixiert wird,
worin der Stößel (53) gemäß einer Einführbetätigung der Zungenplatte (48) in das Schloss (44) in das Trägerelement gedrückt wird.

2. Die Sicherheitsgurtvorrichtung nach Anspruch 1, worin das Fixierungselement (56) eine Rolle ist.

3. Die Sicherheitsgurtvorrichtung nach Anspruch 1 oder 2, die ferner einen Lösemechanismus (62) aufweist, der in dem Trägerelement (46) angeordnet ist und das Bewegungselement (57) in einer Richtung bewegt, in der der Druck des Gurts (W) gelöst wird.

## Revendications

1. Dispositif de ceinture de sécurité comprenant :
une languette (45) comprenant un élément de support (46) supportant une plaque de languette (48) et permettant à une sangle (W) d'être insérée à travers cette dernière ;
un piston plongeur (53) disposé dans l'élément de support (46) ;
un élément mobile (57) raccordé au piston plongeur (53) et se déplaçant dans une direction dans laquelle la sangle (W) est intercalée entre l'élément mobile et l'élément de support (46) lorsque le piston plongeur (53) est pressé ;
un élément de fixation (56) disposé dans l'élément mobile (57) et fixant la sangle (W) selon un mouvement de la sangle (W) dans une direction d'insertion ; et
une boucle (44) dans laquelle la plaque de languette (48) est insérée et fixée,
dans lequel le piston plongeur (53) est pressé dans l'élément de support selon une opération d'insertion de la plaque de languette (48) dans la boucle (44).

2. Dispositif de ceinture de sécurité selon la revendication 1, dans lequel l'élément de fixation (56) est un rouleau.

3. Dispositif de ceinture de sécurité selon la revendication 1 ou 2, comprenant en outre un mécanisme de déblocage (62) disposé dans l'élément de support (46) et déplaçant l'élément mobile (57) dans une direction dans laquelle la pression de la sangle (W) est relâchée.
